## Europäisches Patentamt
## European Patent Office
## Office européen des brevets

(11) Veröffentlichungsnummer: **0 291 709**
**A2**

# (12) EUROPÄISCHE PATENTANMELDUNG

(21) Anmeldenummer: **88106262.4**

(51) Int. Cl.4: **F16B 39/28 , B60B 3/16**

(22) Anmeldetag: **20.04.88**

(30) Priorität: **16.05.87 DE 3716489**

(43) Veröffentlichungstag der Anmeldung:
**23.11.88 Patentblatt 88/47**

(84) Benannte Vertragsstaaten:
**DE ES FR GB IT NL SE**

(71) Anmelder: **Bergische Achsenfabrik Fr. Kotz & Söhne**
**Am Ohlerhammer**
**D-5276 Wiehl 1(DE)**

(72) Erfinder: **Manske, Jürgen**
**Soelsiefenerstrasse 7**
**D-5276 Wiehl 1(DE)**
Erfinder: **Dick, Wilfried**
**Stein 8**
**D-5207 Ruppichteroth(DE)**
Erfinder: **Becher, Friedhelm**
**Im Inken 8 Prombach**
**D-5223 Nümbrecht(DE)**
Erfinder: **Köster, Hermann**
**Heikausenerstrasse 24**
**D-5226 Reichshof(DE)**
Erfinder: **Pruschinsky, Horst**
**Eckenhagener Strasse 44**
**D-5276 Wiehl(DE)**
Erfinder: **Mierisch, Horst**
**Friedrich-Hebbel Strasse 3 Bomig**
**D-5276 Wiehl 1(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

(54) **Verdrehsicherung für Radbolzen.**

(57) Gegenstand der Erfindung ist eine Verdrehsicherung für Radbolzen (5) mit einem Anlagebund (10) und mit einer Vertiefung (9) für den Anlagebund (10) im Befestigungsflansch (3) einer Radnabe (4). Um eine zuverlässige Verdrehsicherung einteilig und unverlierbar mit den Radbolzen und der Radnabe auszubilden wird vorgeschlagen, an den Anlagebund (10) jedes Radbolzens (5) eine Nase (12) anzuformen und am Rand der Vertiefungen (9) der Radnabe (4) Ausnehmungen (11) für die Nase (12) einzuformen.

Fig.1

## Verdrehsicherung für Radbolzen

Gegenstand der Erfindung ist eine Verdrehsicherung für Radbolzen mit einem Anlagebund und mit einer Vertiefung für den Anlagebund im Befestigungsflansch einer Radnabe.

Eine bekannte und allgemein benutzte Verdrehsicherung für Radbolzen besteht aus einem selbständigen Kerbstift, der in eine Bohrung eingesetzt wird, welche am Rande der Vertiefung der Radnabe so angebracht ist, daß die Vertiefung etwa mit dem halben Durchmesser angeschnitten wird. In dem Anlagebund des Radbolzens ist gleichzeitig eine halbrunde Ausnehmung vorgesehen, so daß der Kerbstift bei in die Radnabe eingesetztem Radbolzen im Bereich von dessen Anlagebund etwa zur Hälfte in die Radnabe und zur anderen Hälfte in den Anlagebund hineinragt. In axialer Richtung ist der Kerbstift auf seiner Innenseite mit einer an der Radnabe befestigten Bremstrommel und auf seiner Außenseite mit einer an der Radnabe befestigten Felge fixiert. Diese bekannte Verdrehsicherung für Radbolzen hat den Nachteil, daß sie mit dem Kerbstift ein weiteres Konstruktionsteil benötigt, welches bei der Montage der Radbolzen an der Radnabe gehandhabt werden muß. Außerdem ist es notwendig die Bohrungen für die Kerbstifte in der Radnabe anzubringen und den Anlagebund jedes Radbolzens mit einer halbkreisförmigen Ausnehmung zu versehen.

Aus der DE-PS 946 269 ist ein -eine Radnabe durchragender Radbolzen bekannt, der, als Gewindestift ausgebildet, beiderseits in Außengewinden ausläuft. Auf den Radbolzen sind Muttern aufschraubbar, um eine feste Verbindung zwischen der Radnabe und einer Radfelge herzustellen. Ein Verdrehen des Radbolzens inner halb der Radnabe wird verhindert, indem in einer halbkugelförmigen Einsenkung des Radbolzens eine Kugel eingelassen ist, die in eine Nut der Radnabe eingreift. Insbesondere kann sich die Nut auch am Rand einer stufenförmigen Vertiefung der Radnabe befinden. Aus der Beschreibungseinleitung zur DE-PS 946 269 ist es außerdem bekannt, den Radbolzen mit einem Bund zu versehen und als Sicherung gegen Verdrehen einen radial aus den Bolzen hervortretenden Stift zu verwenden, der in einen Ausschnitt des Befestigungsflansches eingreift.

Diese bekannten Verdrehsicherungen benötigen mit der Kugel bzw. dem Stift ein weiteres Konstruktionsteil, das bei der Montage des Radbolzens 1 an der Radnabe 3 gehandhabt werden muß bzw. das mittels eines zweckmäßigen Verfahrens am Radbolzen befestigt werden muß. Auf jeden Fall ist der Radbolzen mit einer die Kugel bzw. den Stift aufnehmenden Einsenkung zu versehen.

Aus der DE-PS 504 916 ist eine Nabenbefestigung für Räder bekannt, deren Radbolzen mit einem Anlagebund in einer Vertiefung des Nabenflansches anliegt. Eine Sicherung des Radbolzens gegen Verdrehung ist nicht vorgesehen.

Davon ausgehend liegt der Erfindung die **Aufgabe** zugrunde, eine einfach konstruierte Verdrehsicherung für die Radbolzen an einer Radnabe zu - schaffen, die einteilig mit den Radbolzen und der Radnabe zu schaffen, die einteilig mit den Radbolzen und der Radnabe ausgebildet ist, die unverlierbar von diesen beiden Konstruktionsteilen gebildet wird und die sich ohne Probleme bei den unterschiedlichen Zentrierungsarten (Mittenzentrierung oder Bolzenzentrierung) der Radfelgen anwenden läßt.

Als technische **Lösung** wird dafür eine Verdrehsicherung vorgeschlagen, die durch eine an den Anlagebund des Radbolzens angeformte Nase und eine am Rand der Vertiefung der Radnabe eingeformte Ausnehmung für die Nase gekennzeichnet ist. Bei einer praktischen Ausführungsform wird die Ausnehmung für die Nase zweckmäßig am innenliegenden Rand der Vertiefung angeordnet.

Eine nach dieser technischen Lehre ausgebildete Verdrehsicherung hat den **Vorteil** einer erheblichen konstruktiven Vereinfachung, weil im Vergleich zum Stand der Technik der selbständige Sicherungskörper entfällt und die Einzelteile der Verdrehsicherung praktisch unverlierbar am Radbolzen und der Radnabe ausgebildet sind. Dadurch vereinfachen sich nicht nur die Arbeitsgänge bei der Herstellung, sondern gleichzeitig auch der Arbeitsgang bei der anschließenden Montage der Radbolzen in der Radnabe. Die erfindungsgemäße Verdrehsicherung kann auch ohne Probleme bei den unterschiedlichen Zentrierungsarten (Mittenzentrierung oder Bolzenzentrierung) der Radfelgen und sowohl bei einfach- als auch bei doppeltbereiften Rädern verwendet werden.

Weitere Einzelheiten und Vorteile ergeben sich aus der nachfolgenden Beschreibung der zugehörigen Zeichnungen, in denen eine praktische Ausführungsform einer erfindungsgemäß ausgebildeten Verdrehsicherung dargestellt worden ist. In den Zeichnungen zeigen:

Fig. 1 eine Radbolzenbefestigung für Einfachbereifung und Mittenzentierung im Querschnitt;

Fig. 2 eine Radbolzenbefestigung für Bolzenzentrierung und Einfachbereifung im Querschnitt;

Fig. 3 eine Bolzenbefestigung für Doppelbereifung und Bolzenzentrierung im Querschnitt;

Fig. 4 eine Bolzenbefestigung für Mittenzentrierung und Doppelbereifung im Querschnitt;

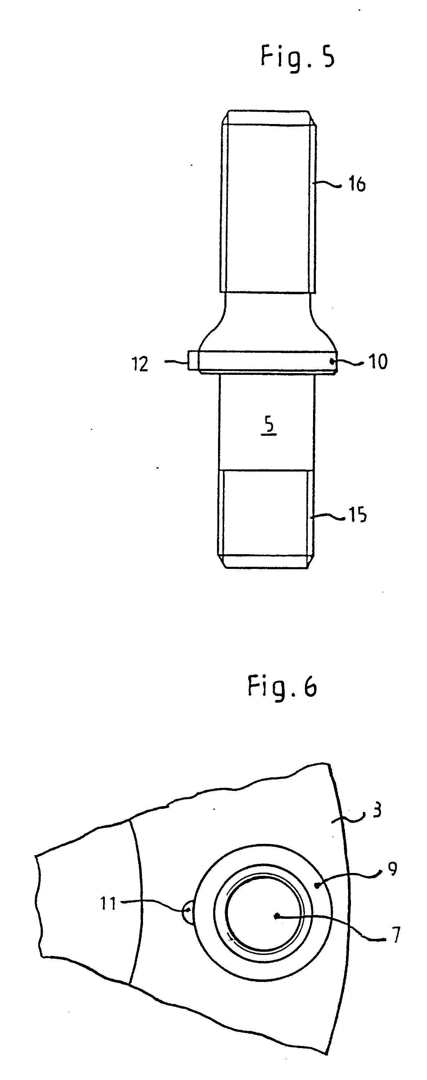

Fig. 5 einen Radbolzen in Ansicht;

Fig. 6 einen Ausschnitt des Befestigungsflansches bei einer Radnabe mit einer Bohrung für einen Radbolzen in Draufsicht.

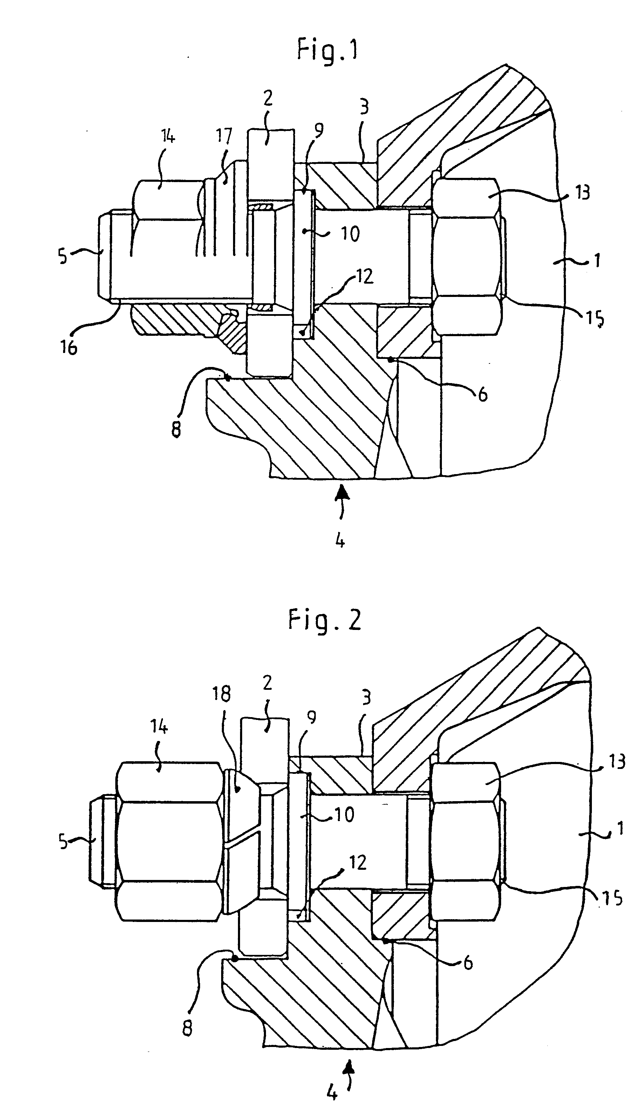

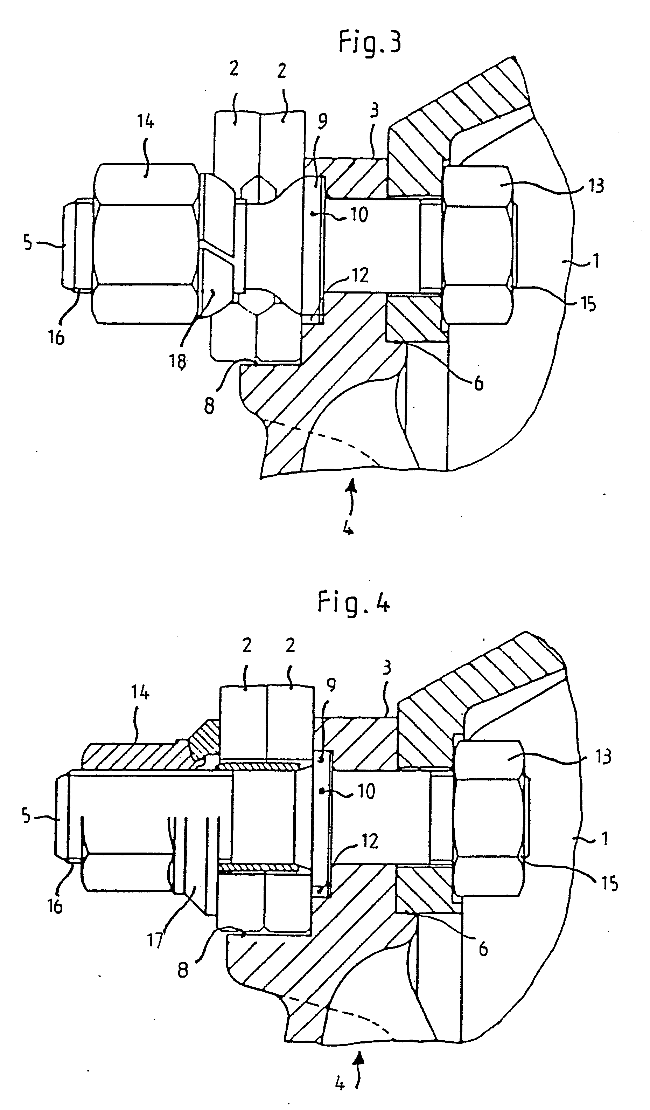

Eine Bremstrommel 1 und eine Radfelge 2 werden am Befestigungsflansch 3 einer Radnabe 4 mittels mehrerer über den Umfang verteilter Radbolzen 5 befestigt. Bei dieser Befestigungsart muß gewährleistet sein, daß die Bremstrommel 1 und die Radfelge 2 in Bezug auf die Drehachse der Radnabe 4 genau zentriert werden. Dies geschieht entweder mittels einer Mittenzentrierung (Fig. 1 und 4) oder einer Bolzenzentrierung (Fig. 2 und 3).

Die Radnabe 4 ist an ihrer Innenseite im Bereich des Befestigungsflansches 3 mit einem umlaufenden Falz 6 für die Anlage der Bremstrommel 1 versehen. In diesem Falz münden auch Bohrungen 7 für die Radbolzen 5. An ihrer Außenseite ist die Radnabe 4 ebenfalls im Bereich ihres Befestigungsflansches 3 mit einem umlaufenden Falz 8 versehen, in den die Radfelge 2 eingreift. Auf dieser Außenseite ist um jede Bohrung 7 herum eine Vertiefung 9 vorgesehen, in die der Radbolzen 5 mit einem Anlagebund 10 eingreift.

Am Rand jeder Vertiefung 9 ist zur Drehachse hin eine halbkreisförmige Ausnehmung 11 eingeformt, in die eine entsprechende Nase 12 am Anlagebund 10 jedes Radbolzens 5 eingreift.

Die Verbindung zwischen Bremstrommel 1, Radfelge 2 und Radnabe 4 wird mittels der Radbolzen 5 über Muttern 13, 14 zusammengehalten, die auf Gewindeenden 15, 16 der Radbolzen 5 aufgeschraubt sind, wobei an der Radfelge 2 entweder eine Unterlegscheibe 17 (Mittenzentrierung) oder ein Zentrierring 18 (Bolzenzentrierung) Verwendung finden. Die Radbolzen 5 sind sowohl an ihrer Innenseite als auch an ihrer Außenseite mit auf- und abschraubbaren Muttern 13, 14 versehen, weil sowohl die Bremstrommel 1 als auch die Radfelge 2 unabhängig voneinander montierbar und demontierbar sein müssen. Aus diesem Grunde ist auch eine zuverlässige Verdrehsicherung zwischen der Radnabe 4 und jedem Radbolzen 5 unabdingbar.

Wie die verschiedenen Anwendungsfälle in den Fig. 1 bis 4 zeigen, kann eine erfindungsgemäß ausgebildete Verdrehsicherung problemlos bei allen in der Praxis vorkommenden Anwendungsfällen der Mittenzentrierung, Bolzenzentrierung, Einfach- und Doppelbereifung verwendet werden. Da der Anlagebund 10 an jedem Radbolzen 5 zwangsläufig vorhanden sein muß, um seine axiale Lage in der Radnabe 4 zu fixieren, müssen für die Verdrehsicherung an der Radnabe 4 nur noch die Ausnehmungen 11 und an den Radbolzen 5 nur noch die Nasen 12 ein- bzw. angeformt werden. Eine einfachere Verdrehsicherung ist kaum noch vorstellbar.

## Bezugszeichenliste

1 Bremstrommel
2 Radfelge
3 Befestigungsflansch
4 Radnabe
5 Radbolzen
6 Falz
7 Bohrung
8 Falz
9 Vertiefung
10 Anlagebund
11 Ausnehmung
12 Nase
13 Mutter
14 Mutter
15 Gewindeende
16 Gewindeende
17 Unterlegscheibe
18 Zentrierring

## Ansprüche

1. Verdrehsicherung für Radbolzen (5) mit einem Anlagebund (10) und mit einer Vertiefung (9) für den Anlagebund (10) im Befestigungsflansch (3) einer Radnabe (2), **gekennzeichnet durch** eine an den Anlagebund (10) des Radbolzens (5) angeformte Nase (12) und eine am Rand der Vertiefung (9) der Radnabe (4) eingeformte Ausnehmung (11) für die Nase (12).

2. Verdrehsicherung nach Anspruch 1, dadurch gekennzeichnet, daß die Ausnehmung (11) am innenliegenden Rand der Vertiefung (9) angeordnet ist.

0 291 709

Fig.1

14  17  2  9  3

5

16  8  10  12  6  13  1  15

4

Fig. 2

14  18  2  9  3

5

8  10  12  6  13  1  15

4

0 291 709

Fig. 3

Fig. 4

Fig. 5

Fig. 6